# EUROPEAN PATENT SPECIFICATION

(11) **EP 0 517 794 B1**
(45) Date of publication and mention of the grant of the patent: **07.02.1996**
(21) Application number: 91905583.0
(22) Date of filing: 28.02.1991
(51) Int. Cl.: F16P 3/14, F16P 3/12

(54) **DETECTION SYSTEM FOR SAFETY EQUIPMENT**
ERFASSUNGSSYSTEM FÜR SICHERHEITSAUSRÜSTUNG
SYSTEME DE DETECTION POUR EQUIPEMENT DE SECURITE

(30) Priority: 28.02.1990 US 486537
(43) Date of publication of application: 16.12.1992
(73) Proprietor: CABOT SAFETY CORPORATION, Southbridge, MA 01550 (US)
(72) Inventor: SALISBURY, Richard, Laguna Niguel, CA 92656 (US); RASMUSSEN, Steen, B., DK-3540 Lynge (DK)
(74) Representative: Attfield, Donald James
(86) International application number: PCT/US91/01299
(87) International publication number: WO 91/13286

(56) References cited:
- EP-A- 0 268 244
- EP-A- 0 315 498
- DE-U- 8 715 937
- GB-A- 2 215 421
- US-A- 3 109 094
- US-A- 3 876 969
- US-A- 4 684 933

## Description

### TECHNICAL FIELD

The present invention relates generally to a detection system for monitoring specified safety equipment being worn by individuals for whom the wearing of such equipment is required in certain circumstances. The invention is specifically directed to the system for detecting specified safety equipment being worn by persons who are passing through an entryway into a designated area which requires those persons in the area to be wearing the specified safety equipment and for sounding an alarm when the specified equipment is not detected on a person who is passing through the entryway into the designated area. The invention is also specifically directed to a detection system for preventing the starting of electrically driven machinery by a person who is not wearing the designated safety equipment for that machine when attempting to start the machine.

### BACKGROUND OF THE INVENTION

Many types of detection systems have been developed for detecting persons who are approaching or passing through entryways to specified areas. More specifically, detection systems have been developed for discriminating between persons who are authorized to enter a specified area and those who are not. For example, U. S. Patent No. 4,684,933 to Dill discloses a system which discriminates between a person who is wearing a small metal object and a person who is not. Unfortunately, this system can only be used in circumstances where the wearing or not wearing of a small metal object is tightly controlled, such as in certain types of institutions.

Another type of detection system provides a warning if the fastener of a garment which is worn by a person is not properly fastened in an environment where the fastener must be closed to ratify safety or sanitary requirements. Unfortunately, none of the prior art detection systems are directed to monitoring safety equipment compliance or capable of detecting or distinguishing, for example, safety eyewear from conventional eyewear. Typically, the monitoring of the wearing of specified safety equipment by persons entering a designated area or for operating a designated machine is accomplished by visual manual inspection. In this scenario, a full time guard or supervisor must be employed at the entryway to a designated area or within the facility itself to supervise the work area. Only by maintaining constant visual with the workers is it possible to ensure that all types of safety equipment are worn by machine operators. In spite of extensive education and training on the proper use of safety equipment and the threat of disciplinary action for noncompliance with safety policies, violations of safety policies continue to occur throughout industry. These violations inevitably lead to serious injuries, typically to the face and eyes. The slight inconvenience of wearing proper safety equipment is a small price to pay to avoid the pain, suffering and loss of production for an individual who had sustained an injury due to the failure to wear proper safety equipment. Even if the individual is conscientious about using proper safety eyewear under most circumstances, this is all negated when an injury occurs during one careless moment when a person forgets to wear his or her safety equipment when entering a designated area, is in a hurry, or only intends to stay in the designated area for a short time.

These and other difficulties experienced with the use of safety equipment in industry have been obviated by the GB-A-2215421 discloses a detection system for controlling a machine which system monitors the position of a person wearing specified safety equipment required for the operation of the machine. The system includes a controller acting to switch the machine on in response to a beam of infra-red radiation transmitted by the controller and reflected back thereto by a reflector carried on the specified safety equipment and to switch the machine off when such beam ceases to be reflected back thereto.

These and other difficulties experienced with the use of safety equipment in industry have been obviated by the present invention.

It is, therefore, a principal object of the invention to provide an automatic detection system for safety equipment which will sound an alarm or similar warning signal when a person who is not wearing the specified eyewear attempts to enter a designated area within which use of such equipment is required by law or by company standards.

Another object of this invention is to provide for an automatic detection system for safety equipment which will detect the wearing of specified safety equipment by persons of different heights who are entering a designated area within which use of such equipment is required.

A further object of the present invention is the provision of an automatic detection system for specified safety equipment which is being worn by a person who is operating an electrically driven machine for which the wearing of specified safety equipment is required when operating the machine.

It is another object of the present invention to provide an automatic detection system for specified equipment which is being worn by a person who is operating an electrically driven machine which prevents the machine from being started by a person who is not wearing the safety equipment which is specified for that machine.

A still further object of the invention is the provision of an automatic detection system for safety equipment which is being worn by a person who is operating an electrically driven machine which cannot be started by a person who is not wearing the specified equipment and which will automatically shut off when that person leaves the machine.

With these and other objects in view, as will be apparent to those skilled in the art, the invention resides in the combination of parts set forth in the specification and covered by the claims appended hereto.

### DISCLOSURE OF INVENTION

The present invention is directed to a detection system for monitoring specified safety equipment being worn by a person who is entering a designated area which requires the wearing of such equipment.

In one embodiment, the detection system comprises an infrared reflector which is fixed to a designated piece of equipment, for example, safety eyewear, an infrared transmitter and an infrared receiver which are located at one side of an entryway to the designated area and an alarm system which is activated when a person who is not wearing the specified equipment attempts to pass through the entryway into the designated area. When a person who is wearing the specified safety equipment enters the entryway, infrared radiation from the transmitter will be reflected back to the receiver from the infrared reflector of the specified equipment so that the alarm which is controlled by the receiver will not be activated.

The present invention also consists of a detection system for monitoring specified safety equipment being worn by a person who is located at a designated position for operating an electrically driven machine which requires the wearing of the such equipment during the operation of a machine. The detection system in this embodiment comprises an infrared reflector on the specified equipment, an infrared transmitter which directs infrared radiation toward the position which is being occupied by the machine operator, an infrared receiver which is located adjacent the infrared transmitter, and control circuitry for the machine which is operatively connected to the transmitter and receiver so that the machine can only be operated by a person who is wearing the specified safety equipment.

Another embodiment of the detection system of the present invention comprising a teleloop mounted onto an entryway which emits an telemagnetic field, a signal generating means which supplies the signal to the teleloop at a pre-selected frequency, a ferromagnetic transducer which is located on the safety equipment and vibrates when exposed to the telemagneticfield to generate tone, and a sound receiving means which will receive the tone generated from the vibration of the transducer membrane. In this embodiment, an alarm is activated when no transducer produced tone is received by the sound receiving means.

In another embodiment, the detection system comprising a transducer which is located on one side of an entryway for emitting a radiation wave of a pre-selected frequency toward the opposite side of the entryway, and a resonator which is located on the safety equipment, the resonator comprising a ceramic crystal that is tuned to resonate at the same pre-selected frequency as the radiation wave to generate a tone. The tone generated from the resonating crystal is received by a sound receiving means. Again, as in previous embodiments, an alarm is activated when no resonating produced tone is received by the sound receiving means, thus indicating that an individual was not wearing the proper safety equipment.

The present invention is also directed to safety equipment for use in the detection systems as described above.

### BRIEF DESCRIPTION OF THE DRAWINGS

FIG. 1 is a front elevational view showing a person in an entryway which is equipped with the safety equipment detection system of a first embodiment the present invention.

FIG. 2 is a perspective view of an example of safety equipment which is equipped with an infrared reflector which forms part of the detection system of the present invention.

FIG. 3 is an electrical diagram of the electrical controls for the detection system of the first embodiment present invention.

FIG. 4 is an electrical diagram showing a variation of electrical controls for the first embodiment of the present invention shown in FIG. 1.

FIG. 5 is a front elevational view which is similar to FIG. 1 showing a second embodiment of the invention which was two transmitter receiver combinations.

FIG. 6 is a plan view of the second embodiment, in which two transmitter receiver combinations are employed.

FIG. 7 is an electrical diagram of the electrical controls for the second embodiment of FIG. 5.

FIG. 8 is a plan view of safety equipment which is equipped with two infrared reflectors which form part of the second embodiment of FIGS. 5-7.

FIG. 9 is an electrical diagram showing a variation of the electrical controls for the second embodiment.

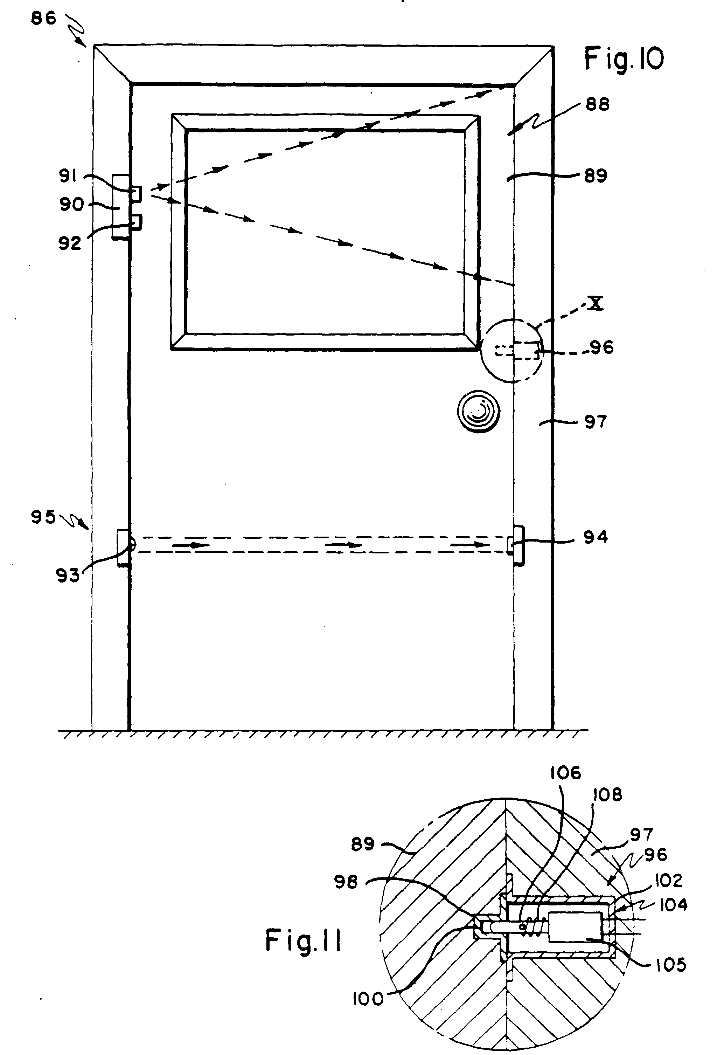

FIG. 10 is a front elevational view of an entryway which is equipped with a third embodiment of the present invention.

FIG. 11 is a fragmentary cross sectional view of an area of FIG. 10 which is indicated by the reference numeral X and shown on an enlarged scale.

FIG. 12 is an electrical diagram of the electrical controls for the third embodiment of the invention.

### MODE(S) OF CARRYING OUT THE INVENTION

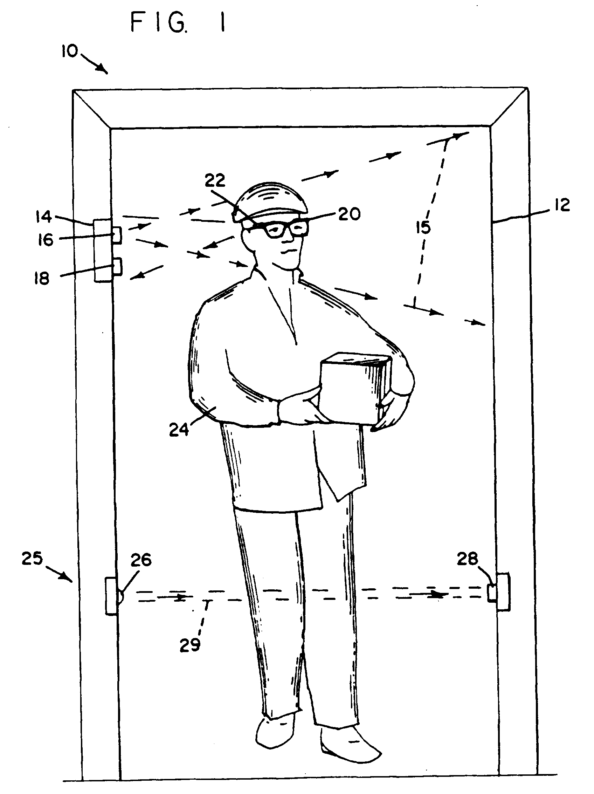

Referring first to Figures 1-3, there is shown a first embodiment of a detection system of the present invention which is generally indicated by the reference numeral 10. The detection system 10 is shown applied to an entryway 12 andcomprises a transceiver 14 which is mounted on one side of the entryway 12. For purposes of illustration, the transceiver 14 in this first embodiment includes an infrared transmitter 16 which transmits a spreading beam 15 of infrared radiation to the opposite side of the entryway and an infrared receiver 18. The detection system 10 also includes an electronic sensor, generally indicated by the reference numeral 25 for sensing the presence of a person in the entryway 12. The sensor 25 comprises a lamp 26 at one side of the entryway 12 and a photo receptor 28 at the opposite side of the entryway 12 for receiving a beam of light from the lamp 26. The photo receptor 28 is actuated when the beam of light, indicated by the reference numeral, 29 from the lamp 26 is interrupted when a person, indicated by the reference numeral 24, passes through the entryway 12. Other commercially available motion detection systems, including infrared sensitive plastic foils, may also be utilized.

The detection system 10 also includes an infrared reflector 22 which is mounted onto the protective safety equipment, and in this instance, on the frame of the protective eyewear 20 which is shown being worn by a person such as that which is worn by the individual 24 who is depicted in FIG. 1. In this embodiment of the detection system of the present invention, only the proper safety equipment, e.g. the safety eyewear shown in Figure 1, which is specified for a designated area will contain the infrared reflector 22. When a person enters this designated area through the entryway 12, infrared radiation from the transmitter 16 will strike the infrared reflector 22 and will be reflected back to the infrared receptor 18. If the sensing means 25 senses a person in the entryway 12 and that person does not have proper safety eyewear which contains the infrared reflector 22, infrared radiation from the transmitter 16 will not be reflected back to the receiver 18. This will cause the receiver 18 to initiate the sounding of an alarm, not shown, which signals the arrival of a person into the designated area who is not wearing the specified safety eyewear for that area.

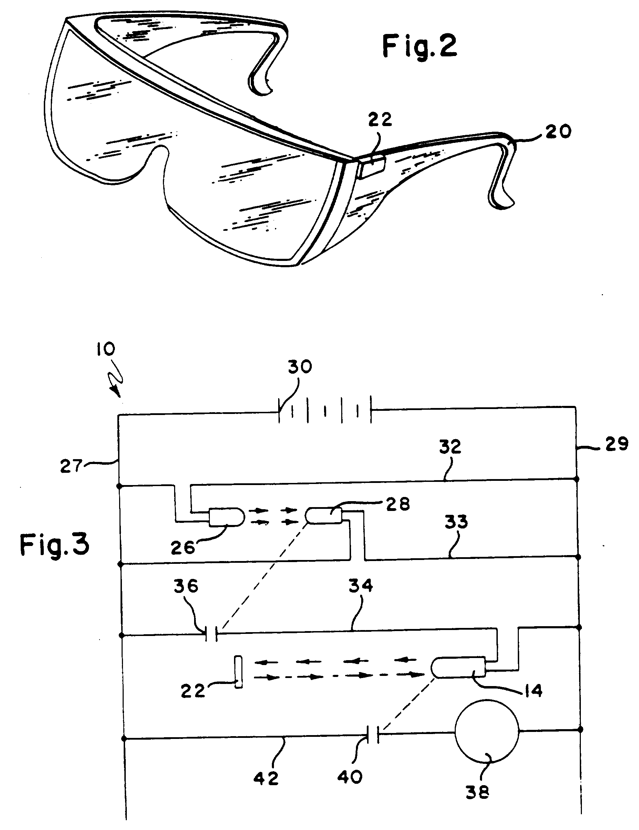

Referring particularly to the electrical diagram of FIG. 3, the interaction of the various elements which make up the detection system 10 is described in conjunction with FIG. 3. The lamp 26 and the photo receptor 28 are located on lines 32 and 33 which are connected across a pair of power lines 27 and 29 from a source of electrical power 30. The transceiver 14 is located on a line 34 which contains a normally open contact 36 to maintain the transceiver 14 in a normally de-energized state. When a person enters the entryway 12, the beam of light from the lamp 26 is interrupted. This causes the normally open contact 36 of the receptor 28 to close, thereby completing a circuit across the power lines 27 and 29 through line 34 and energizing the transceiver 14. The transmitter portion 16 of the transceiver transmits a beam of infrared radiation toward the other side of the entryway 12. If the person in the entryway 12 is wearing the specified safety eyewear, a portion of the infrared beam will strike the reflector 22 and be reflected back to the receiver portion 18 of the transceiver. If the person is not wearing the specified safety eyewear, no infrared radiation will be reflected to the receiver 18. This causes its normally open contact 40 on line 42 to close, thereby connecting line 42 across the power line 27 and 29 and energizing an alarm 38 which is on line 42. This will either remind the individual who set off the alarm of the need to wear proper eyewear or alert supervisory personnel that a person who is wearing improper eyewear has entered the designated area.

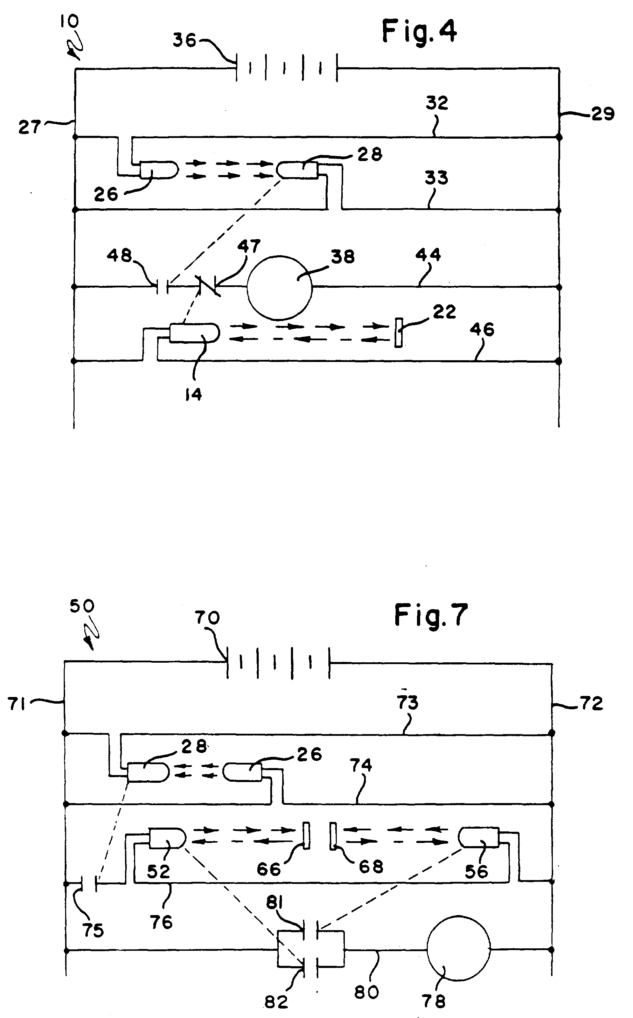

Referring to FIG. 4, there is shown electrical diagram which illustrates a variation in the electrical controls and operation of the first embodiment of the present invention and is generally indicated by the reference numeral 10'. The lamp 26 and the photo receptor 28 are connected to lines 32 and 33 which are connected across the power lines 27 and 29 in the same manner as shown in FIG. 3. The transceiver 14 is located on a line 46 which is connected across the power lines 27 and 29 so that the transceiver 14 is normally in an energized state. Therefore, the beam of infrared radiation from the transmitter portion 16 of the transceiver is transmitted continuously across the entryway 12. The alarm 38 is located on a line 44 which contains a normally open contact 48 and a normally closed contact 47. The alarm 38 is, thereby, normally in a de-energized state. The contact 48 is part of the internal circuitry of receptor 28. When the beam of light from the lamp 26 is interrupted by a person walking through the doorway 12, the photo receptor 28 closes the contact 48. If the person who interrupted the beam of light from the lamp 26 is wearing specified safety eyewear, infrared radiation from the transmitter portion of the transceiver 14 will strike the reflector 22 on the eyewear and will be reflected back to the receiver portion 18 of the transceiver. The transceiver 14 has a built in relay circuit which includes the normally closed contact 47 and is effective to open the contact 47 when reflected infrared radiation is received by the receiver 18. This will keep the line 44 open and maintain the alarm 38 in the de-energized state. However, if the person is not wearing the proper protective eyewear, no reflected infrared radiation will be received by the transceiver 14 and the normally closed contact 47 will remain closed. Since the normally open contact 48 is also closed by the relay circuit of the photo receptor 28 the alarm 38 will be energized to warn the person who is passing through the entryway 12 and other supervisory personnel that a person is entering the designated area without wearing the specified safety eyewear for that area.

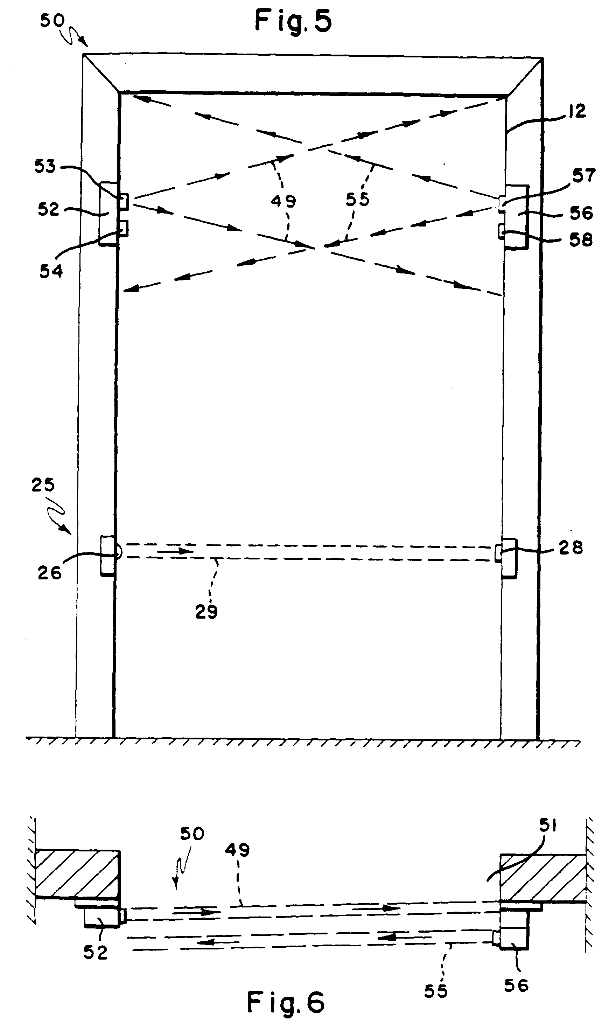

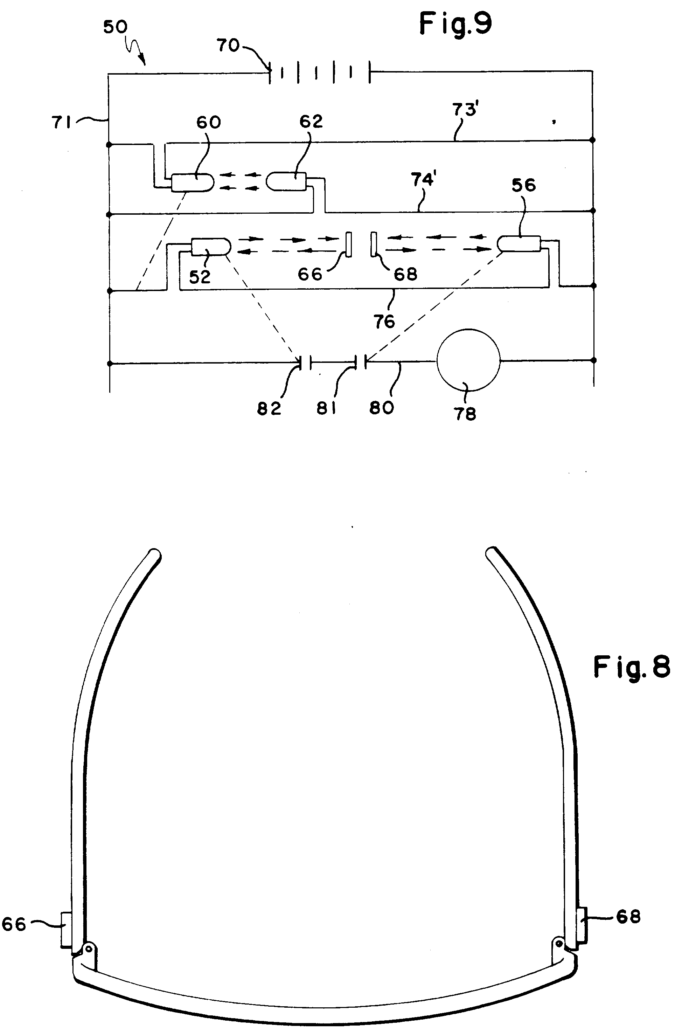

Referring to FIG.'s 5, 6 and 7, there is shown a second embodiment of the invention which is generally indicated by the reference numeral 50. The detection system 50 comprises the same electronic sensor 25 as for the first embodiment, including the lamp 26 for transmitting the beam of light 29 across the entryway 12 to the photo receptor 28. The detection system 50 also comprises a first transceiver 52 which is located at one side of the entryway 12 and a second transceiver 56 which is located at the opposite side of the entryway. The first transceiver 52 comprises a transmitter 53 for transmitting a beam, 49, of infrared radiation to the opposite side of the entryway and a receiver 54 for receiving reflected infrared radiation. The second transceiver 56 comprises a transmitter 57 for transmitting a beam, 55, of infrared radiation to the first side of the entryway and a receiver 58 for receiving reflected infrared radiation. Each infrared transmitter transmits a beam of infrared radiation which spreads vertically but is relatively narrow from front to back. The transceivers 52 and 56 are offset front to back as shown in FIG. 6 so that the beams from their respective transceivers are offset front to back. Therefore, the infrared radiation from one transmitter will not affect the receiver of the other transmitter. The safety eyewear which is to be used with the second embodiment 50, indicated by the reference numeral 64 in FIG. 8, is equipped two infrared reflectors 66 and 68 which are located on opposite sides of the eyeglass frame.

The operation of the second embodiment 50 will now be readily understood with reference to the electrical controls which are shown in FIG. 7. The lamp 26 and the photo receptor 28 are located on lines 74 and 73, respectively, which are connected across a pair of power lines 71 and 72 which are, in turn, connected to a source of electrical power 70. The lamp 26 is on constantly for transmitting a continuous beam of light 29 to the photo receptor 28. The first and second transceivers 52 and 56, respectively, are located on a line 76 which also contains a normally open contact 75. This maintains the line 76 open and the first and second transceivers 52 and 56, respectively, deactivated. An alarm 78 is located on a line 80 which contains a pair of parallel normally open contacts 81 and 82. The contacts 81 and 82 keep the line 80 open and maintain the alarm 78 in a deactivated state. The closing of either of the contacts 81 and 82 will complete a circuit across the line 80 between the power line 71 and 72 to activate the alarm 78. The contact 81 is part of a relay circuit of the second transceiver 56. The normally open contact 81 forms part of a relay circuit of the first transceiver 52. When a beam of light from the lamp 26 is interrupted by a person walking through the entryway 12, the photo receptor 28 is effective to close the normally open contact 75 which forms part of the relay circuit of the photo receptor 28. The closing of contact 75 completes a circuit across the line 76 and energizes the transceivers 52 and 56 for transmitting beams of infrared radiation in opposite directions, as shown in FIG.'s 5 and 6. If the person who is passing through the entryway 12 is wearing proper safety eyewear 64, infrared radiation will be reflected from the reflector 66 back to the receptor portion 54 of the first transceiver 52 and infrared radiation will be reflected from the reflector 68 back to the receiver portion 58 of the second transceiver 56. When this occurs, the contacts 81 and 82 will remain open. However, if the receiver portion of either of the transceivers 52 and 56 does not receive reflected infrared radiation it will close its respective contact 81 or 82. This will complete a circuit across line 80 and energize the alarm 78.

FIG. 9 shows a variation in the controls and operation of the second embodiment of the invention which is generally indicated by the reference numeral 50'. The controls for the variation 50' of the second embodiment are identical to the controls which are shown and described in FIG. 7, except that the normally open contacts 81 and 82 of the first and second transceivers 52 and 56 respectively are arranged in series on line 80 which contains the alarm 78. In this variation, if only one transceiver fails to receive reflected infrared radiation, its corresponding contact 81 or 82 on line 80 will be closed. However, the other contact on 80 which is controlled by the other transceiver will remain open as long as the other transceiver receives reflected infrared radiation from the corresponding reflector of the safety eyewear 64. If neither of the transceivers 52 and 56 receives reflected infrared radiation, both contacts 81 and 82 will be closed and the alarm 78 will be activated.

Referring to FIG.'s 10 and 11 there is shown a third embodiment of the detection system of the present invention which is generally indicated by the reference numeral 86. The detection system 86 is shown applied to an entryway 88 which is closed by a door 89. The door 89 is maintained in a normally locked state by means of an electrically actuated locking mechanism 96. The detection system 86 comprises a transceiver 90 which is located at one side of the doorway and which includes an infrared transmitter 91 and an infrared receiver 92. When activated, the transmitter 91 projects a beam of infrared radiation across the entryway 88 to the opposite side of the entryway. The detection system 86 also comprises an electric sensor, generally indicated by the reference numeral 95, which includes a lamp 93 at one side of the entryway 88 and a photo receptor 94 at the opposite side of the entryway. The lamp 93 projects a light beam across the entryway to the photo receptor 94. The transceiver 90 and the sensor 95 are located sufficiently in front of the door 89 so that the light beam from the lamp 93 and the infrared radiation from the transmitter 91 will be interrupted by a person, as that person approaches the door 89. The door 89 is maintained in a normally locked state to prevent persons from entering the designated area beyond the door, unless the person is wearing specified safety eyewear. The locking mechanism 96 locks the door 89 against the adjacent door jam 97 and comprises a catch 98 which is recessed in the outer edge of the door and which has a bore 100 which faces the door jam 97. The lock 96 also includes a housing 102 which is recessed in the edge of the door jam and which faces the catch 98. The housing 102 contains a solenoid, generally indicated by the reference numeral 104, which includes a core 105 and a plunger 106 which is moveable relative to the core 105 toward and away from the bore 100 of the catch 98. When the solenoid 104 is in the de-energized state, a spring 108 maintains the plunger 106 within the bore 100 to maintain the door 89 in the locked condition. When the solenoid 104 is energized, the plunger 106 is drawn into the core out of the bore 100 so that the door 89 is in the unlocked condition.

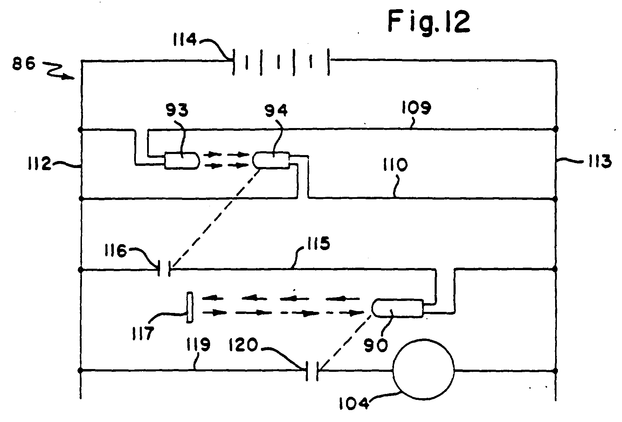

The operation of the third embodiment 86 will be readily understood in conjunction with the electrical controls for the third embodiment shown in FIG. 12.

Referring to FIG. 12, the lamp 93 and the photo receptor 94 are located on lines 109 and 110 which extend across a pair of power lines 112 and 113 which are connected to a source of electrical power 114. The photo receptor 94 includes a relay circuit which includes a normally open contact 116 on line 115. The transceiver 90 is also located on line 115 and is maintained in a de-energized state due to the open contact 116. The transceiver 90 has a relay circuit which includes a normally open contact 120 on line 119. The solenoid 104 is also located on line 119 and is maintained in the deactivated state due to the open contact 120. When a person approaches the door 89 the light beam from the lamp 93 to the photo receptor 94 is interrupted. This causes the relay circuit of the photo receptor 94 to close the normally open contact 116. This completes a circuit across the line 115 and energizes the transceiver 90. The transmitter 91 of the receiver 90 projects a beam of infrared radiation across the doorway 88. If the person who is approaching the door 89 is wearing specified safety eyewear, it has attached thereto an infrared reflector 117. The infrared radiation from the transmitter 91strikes the infrared reflector and a portion of the beam is reflected back to the receiver 92. When the reflected infrared radiation is received by the receiver 90, its relay circuit is activated to close the normally open contact 120 to complete a circuit across the line 119 and thereby energize the solenoid 104. When the solenoid 104 is energized, the plunger 106 is drawn out of the bore 100, thereby unlocking the door 89. This allows the person to open the door and pass through the entryway 88 into the designated area behind the door 89.

The above examples have been directed to a detection system for safety eyewear, however, it is well appreciated by those skilled in the art that other types of safety equipment are also within the scope of the invention.

## Claims

1. A detection system (10) for monitoring specified safety equipment (20) being worn by a person, said detection system comprising:
(a) an infra-red reflector (22) which reflects infra-red radiation and which is fixed to said specified equipment,
(b) an infra-red transmitter (16) fixedly located for transmitting a beam of infra-red radiation in a fixed direction so that at least a portion of said beam is reflected back by the reflector of said specified equipment worn by a person passing said transmitter,
(c) a fixedly located receiver (14) for receiving said reflected infra-red radiation,
(d) a device operatively connected to said receiver, characterised in that said specified equipment is worn by a person approaching an entry-way (12) into a designated area which requires the wearing of said specified safety equipment, said transmitter and receiver being located at one side of said entry-way, said system including an electronic sensor (25) located at said entry-way for sensing a person approaching or passing through said entry-way and operatively connected to said transmitter or receiver for activating the said device.

2. A detection system according to claim 1 wherein the device is an alarm (38) operatively connected to said receiver and said electronic sensor, said alarm being normally inactive and activated only when said electronic sensor senses a person passing through said entry-way and no reflected infra-red radiation is received by the receiver.

3. A detection system according to claim 1 wherein said device is an alarm (38) that is normally inactive and is operatively connected to said transmitter and said receiver, said transmitter being normally inactive and activated to transmit a beam of infra-red radiation upon receiving a predetermined electrical signal, said electronic sensor being operatively connected to said transmitter and transmits said predetermined electrical signal to said transmitter when a person passes through said entry-way, said alarm being activated when a beam of infra-red radiation is transmitted by said transmitter and no reflected infra-red radiation is received by said receiver.

4. A detection system according to claim 1 wherein said designated area is closed by a door (89) having an electrically controlled lock (96), said lock being normally locked and being unlocked upon receiving a predetermined electrical signal, said receiver being operatively connected to said electrically controlled lock to transmit said predetermined electrical signal for unlocking said lock when infra-red radiation is transmitted by said transmitter and reflected infra-red radiation is received by said receiver.

5. A detection system according to any one of the preceding claims wherein said transmitter and said receiver are housed in a single transceiver unit.

6. A detection system according to any one of the preceding claims wherein said electronic sensor comprises:
(a) a lamp (26) which is located at one side of said entry-way for projecting a beam of light toward the opposite side of said entry-way, and
(b) a photo-receptor (28) which is located on the side of said entry-way opposite from said lamp for receiving said beam of light, said receptor being operatively connected to said transmitter or said receiver for transmitting a predetermined electrical signal to said transmitter or said receiver upon the interruption of said beam of light by a person who is passing through said entry-way.

7. A detection system according to any one of the claims 1 to 3 wherein said transmitter is a first transmitter (53) and said receiver is a first receiver (54), wherein a second infra-red transmitter (57) is located at the opposite side of said entry-way for transmitting infra-red radiation toward said first side and a second infra-red receiver (58) is located at said opposite side for receiving reflected infra-red radiation from said first side, wherein there are two infra-red reflectors, a first infra-red reflector (66) which is fixed to one side of said specified safety equipment for reflecting infra-red radiation from said first transmitter to said first receiver and a second reflector (68) for reflecting infra-red radiation from said second transmitter to said second receiver, and wherein said device is operatively connected to said first and second transmitters and/or said first and second receivers, said device remaining inactive when infra-red radiation is transmitted by said first and second transmitters and reflected from at least one of said first and second reflectors, respectively, to at least one of said first and second receivers, respectively, said device being activated by infra-red radiation is transmitted by said first and second transmitters and no reflected infra-red radiation is received by at least one of said receivers.

8. A detection system according to any one of the preceding claims wherein said safety equipment is protective eye-wear, goggles, face-shields, respirators, dust masks, hard hats, hearing protectors, protective footwear, clothing or combinations thereof.

## Patentansprüche

1. Erfassungssystem (10) zur Überwachung einer spezifizierten Sicherheitsausrüstung (20), die durch eine Person getragen wird, wobei das Erfassungssystem aufweist:
(a) einen Infrarot-Reflektor (22), der Infrarotstrahlung reflektiert und der an der spezifizierten Ausrüstung angebracht ist,
(b) einen Infrarot-Transmitter (16), der fest zum Senden eines Strahls einer Infrarotstrahlung in einer festgelegten Richtung angeordnet ist, so daß mindestens ein Bereich des Strahls durch den Reflektor der spezifizierten Ausrüstung, die durch eine Person getragen wird, reflektiert wird, die den Transmitter passiert,
(c) einen fest angeordneten Empfänger (14) zum Empfangen der reflektierten Infrarotstrahlung,
(d) eine Vorrichtung, die betriebsmäßig mit dem Empfänger verbunden ist, dadurch gekennzeichnet, daß die spezifizierte Ausrüstung durch eine Person getragen wird, die sich einem Eingangsweg (12) in einem zugeordneten Bereich nähert, der das Tragen der spezifizierten Sicherheitsausrüstung erfordert, wobei der Transmitter und der Empfänger an einer Seite des Eingangswegs angeordnet sind, wobei das System einen elektronischen Transmitter (25) umfaßt, der an dem Eingangsweg zum Fühlen einer Person angeordnet ist, die sich dem Eingangsweg nähert oder ihn passiert, und der betriebsmäßig mit dem Transmitter oder dem Empfänger zur Aktivierung der Vorrichtung verbunden ist.

2. Erfassungssystem nach Anspruch 1, wobei die Vorrichtung eine Alarmeinrichtung (38) ist, die betriebsmäßig mit dem Empfänger und dem elektronischen Sensor verbunden ist, wobei die Alarmeinrichtung normalerweise inaktiv ist und nur aktiviert wird, wenn der elektronische Sensor eine Person fühlt, die den Eingangsweg passiert, und keine reflektierte Infrarotstrahlung durch den Empfänger empfangen wird.

3. Erfassungssystem nach Anspruch 1, wobei die Vorrichtung eine Alarmeinrichtung (38) ist, die normalerweise inaktiv ist und betriebsmäßig mit dem Transmitter und dem Empfänger verbunden ist, wobei der Transmitter normalerweise inaktiv ist und aktiviert wird, um einen Strahl Infrarotstrahlung unter Empfang eines vorbestimmten, elektrischen Signals zu senden, wobei der elektronische Sensor betriebsmäßig mit dem Transmitter verbunden ist und das vorbestimmte, elektrische Signal zu dem Transmitter sendet, wenn eine Person den Eingangsweg passiert, wobei die Alarmeinrichtung aktiviert wird, wenn ein Strahl Infrarotstrahlung durch den Transmitter gesendet wird und keine reflektierte Infrarotstrahlung durch den Empfänger empfangen wird.

4. Erfassungssystem nach Anspruch 1, wobei der zugeordnete Bereich durch eine Tür (84) verschlossen ist, die eine elektrisch kontrollierte Verriegelung (96) besitzt, wobei die Verriegelung normalerweise verriegelt ist und unter Empfang eines vorbestimmten, elektrischen Signals entriegelt wird, wobei der Empfänger betriebsmäßig mit der elektrisch kontrollierten Verriegelung verbunden ist, um das vorbestimmte, elektrische Signal zum Entriegeln der Verriegelung zu senden, wenn Infrarotstrahlung durch den Transmitter gesendet wird und reflektierte Infrarotstrahlung durch den Empfänger empfangen wird.

5. Erfassungssystem nach einem der vorhergehenden Ansprüche, wobei der Transmitter und der Empfänger in einer einzelnen Sendeempfänger-EInheit untergebracht sind.

6. Erfassungssystem nach einem der vorhergehenden Ansprüche, wobei der elektronische Sensor aufweist:
(a) eine Lampe (26), die an einer Seite des Eingangswegs zum Projizieren eines Lichtstrahls zu der gegenüberliegenden Seite des Eingangswegs hin angeordnet ist, und
(b) einen Photorezeptor (28), der auf der Seite des Eingangswegs gegenüberliegend der Lampe zum Empfang des Lichtstrahls angeordnet ist, wobei der Rezeptor betriebsmäßig mit dem Transmitter oder dem Empfänger zum Senden eines vorbestimmten, elektrischen Signals zu dem Transmitter oder dem Empfänger bei der Unterbrechung des Lichtstrahls durch eine Person, die den Eingangsweg passiert, verbunden ist.

7. Erfassungssystem nach einem der Ansprüche 1 bis 3, wobei der Transmitter ein erster Transmitter (53) und der Empfänger ein erster Empfänger (54) ist, wobei ein zweiter Infrarot-Transmitter (57) an der gegenüberliegenden Seite des Eingangswegs zum Senden von Infrarotstrahlung zu der ersten Seite hin angeordnet ist und ein zweiter Infrarot-Empfänger (58) an der gegenüberliegenden Seite zum Empfangen reflektierter Infrarotstrahlung von der ersten Seite angeordnet ist, wobei dort zwei Infrarot-Reflektoren vorhanden sind, wobei ein erster Infrarot-Reflektor (66), der mit einer Seite der spezifizierten Sicherheitsausrüstung zum Reflektieren von Infrarotstrahlung von dem ersten Transmitter zu dem ersten Empfänger und ein zweiter Reflektor (68) zum Reflektieren von Infrarotstrahlung von dem zweiten Transmitter zu dem zweiten Empfänger angebracht sind und wobei die Vorrichtung betriebsmäßig mit dem ersten und dem zweiten Transmitter und/oder dem ersten und dem zweiten Empfänger verbunden ist (sind), wobei die Vorrichtung inaktiv verbleibt, wenn Infrarotstrahlung durch den ersten und den zweiten Transmitter gesendet und von mindestens einem des ersten und des zweiten Reflektors jeweils zu mindestens einem des ersten und des zweiten Empfängers jeweils reflektiert wird, wobei die Vorrichtung durch Infrarotstrahlung aktiviert wird, die durch den ersten und den zweiten Transmitter gesendet wird, und keine reflektierte Infrarotstrahlung durch mindestens einen der Empfänger empfangen wird.

8. Erfassungssystem nach einem der vorhergehenden Ansprüche, wobei die Sicherheitseinrichtung einen Augentrageschutz, Schutzbrillen, Schutzmasken, Atemmasken, Staubmasken, Schutzhelme, Hörschutzeinrichtungen, Schutzschuhe, Bekleidung oder Kombinationen davon umfaßt.

## Revendications

1. Système de détection (10) pour contrôler un équipement de sécurité spécifié (20) porté par une personne, ledit système de détection comprenant :
(a) un réflecteur à infrarouge (22) qui réfléchit un rayonnement infrarouge et qui est fixé audit équipement spécifié,
(b) un transmetteur à infrarouge (16) situé fixement pour transmettre un faisceau à rayonnement infrarouge dans une direction fixe de sorte qu'au moins une portion dudit faisceau est re-réfléchie par le réflecteur dudit équipement spécifié porté par une personne passant ledit transmetteur,
(c) un récepteur situé fixement (14) pour recevoir ledit rayonnement infrarouge réfléchi,
(d) un dispositif opérativement relié audit récepteur, caractérisé en ce que ledit équipement spécifié est porté par une personne approchant un passage d'entrée (12) dans une zone désignée qui exige le port dudit équipement de sécurité spécifié, lesdits transmetteur et récepteur étant situés à un côté dudit passage d'entrée, ledit système comprenant un détecteur électronique (25) situé audit passage d'entrée pour détecter une personne approchant ou passant à travers ledit passage d'entrée et opérativement relié audit transmetteur ou audit récepteur pour activer ledit dispositif.

2. Système de détection selon la revendication 1, dans lequel le dispositif précité est une alarme (38) opérativement reliée au récepteur précité et au détecteur électronique précité, ladite alarme étant normalement inactive et activée seulement lorsque ledit détecteur électronique détecte une personne passant à travers le passage d'entrée précité et qu'aucun rayonnement infrarouge réfléchi est reçu par le récepteur.

3. Système de détection selon la revendication 1, dans lequel le dispositif précité est une alarme (38) qui est normalement inactive et est opérativement reliée audit transmetteur et audit récepteur, ledit transmetteur étant normalement inactif et activé pour transmettre un faisceau de rayonnement infrarouge lors de la réception d'un signal électrique prédéterminé, le détecteur électronique précité étant opérativement relié audit transmetteur et transmet ledit signal électrique prédéterminé audit transmetteur lorsqu'une personne passe ledit passage d'entrée, ladite alarme étant activée lorsqu'un faisceau de rayonnement infrarouge est transmis par ledit transmetteur et qu'aucun rayonnement infrarouge réfléchi est reçu par ledit récepteur.

4. Système de détection selon la revendication 1, dans lequel la zone désignée précitée est fermée par une porte (89) ayant une serrure commandée électriquement (96), ladite serrure étant normalement verrouillée et étant déverrouillée lors de la réception d'un signal électrique prédéterminé, le récepteur précité étant opérativement relié à ladite serrure commandée électriquement pour transmettre ledit signal électrique prédéterminé pour déverrouiller ladite serrure lorsqu'un rayonnement infrarouge est transmis par le transmetteur précité et qu'un rayonnement infrarouge réfléchi est reçu par le récepteur précité.

5. Système de détection selon l'une quelconque des revendications précédentes dans lequel le transmetteur précité et le récepteur précité sont logés dans une unité transcepteur unique.

6. Système de détection selon l'une quelconque des revendications précédentes, dans lequel le détecteur électronique précité comprend :
(a) une lampe (26) qui est située à un côté du passage d'entrée précité pour projeter un faisceau de lumière vers le côté opposé dudit passage d'entrée, et
(b) un photo-récepteur (28) qui est situé sur le côté dudit passage d'entrée à l'opposé de ladite lampe pour recevoir ledit faisceau de lumière, ledit récepteur étant opérativement relié au transmetteur précité ou au récepteur précité pour transmettre un signal électrique prédéterminé audit transmetteur ou audit récepteur lors de l'interruption dudit faisceau de lumière par une personne qui passe à travers ledit passage d'entrée.

7. Système de détection selon l'une quelconque des revendications 1 à 3 dans lequel le transmetteur précité est un premier transmetteur (53) et le récepteur précité est un premier récepteur (54), dans lequel un second transmetteur infrarouge (57) est situé au côté opposé du passage d'entrée précité pour transmettre un rayonnement infrarouge vers ledit premier côté et un second récepteur infrarouge (58) est situé audit côté opposé pour recevoir un rayonnement infrarouge réfléchi dudit premier côté, dans lequel il y a deux récepteurs infrarouge, un premier récepteur infrarouge (66) qui est fixé à un côté de l'équipement de sécurité spécifié précité pour réfléchir un rayonnement infrarouge dudit premier transmetteur audit premier récepteur et un second récepteur (168) pour réfléchir un rayonnement infrarouge dudit second transmetteur audit second récepteur, et dans lequel le dispositif précité est opérativement relié auxdits premier et second transmetteurs et/ou auxdits premier et second récepteurs, ledit dispositif restant inactif lorsqu'un rayonnement infrarouge est transmis par lesdits premier et second transmetteurs et réfléchi à partir d'au moins l'un desdits premier et second réflecteurs, respectivement, à au moins l'un desdits premier et second récepteurs, respectivement, ledit dispositif étant activé par le rayonnement infrarouge qui est transmis par lesdits premier et second transmetteurs et aucun rayonnement infrarouge réfléchi est reçu par au moins l'un desdits récepteurs.

8. Système de détection selon l'une quelconque des revendications précédentes, dans lequel l'équipement de sécurité précité est un support de protection des yeux, des lunettes, des écrans faciaux, des appareils respiratoires, des masques contre des poussières, des casques de chantier, des protecteurs auditifs, des articles chauffants de protection, un vêtement ou des combinaisons de ceux-ci.
